(19)

**Europäisches Patentamt**
**European Patent Office**
**Office européen des brevets**

(11) **EP 4 764 636 A2**

(12) **EUROPEAN PATENT APPLICATION**

(43) Date of publication:
**24.06.2026  Bulletin 2026/26**

(21) Application number: **26174455.1**

(22) Date of filing: **08.06.2021**

(51) International Patent Classification (IPC):
**G02B 6/293** (2006.01)

(52) Cooperative Patent Classification (CPC):
**G02B 27/1006; G02B 27/1086; G02B 27/4233; G02B 27/4283;** G02B 6/29311

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:  **27.10.2020   US 202063105968 P**

(62) Document number(s) of the earlier application(s) in accordance with Art. 76 EPC:
**21887095.4 / 4 217 789**

(71) Applicant: **IPG Photonics Corporation**
**Marlborough, MA 01752 (US)**

(72) Inventors:
  • **GLEBOV, Leonid**
    **Marlborough, MA, 01752 (US)**
  • **DIVLIANSKY, Ivan**
    **Marlborough, MA, 01752 (US)**

  • **MHIBIK, Oussama**
    **Marlborough, MA, 01752 (US)**
  • **SHIRSHNEVA, Elena**
    **Marlborough, MA, 01752 (US)**
  • **SMIRNOV, Vadim**
    **Marlborough, MA, 01752 (US)**

(74) Representative: **Kobiako von Gamm, Iouri**
**Kobiako-von Gamm**
**Patent- und Rechtsanwaltskanzlei**
**PartG mbB**
**Bruckmannstraße 13**
**80638 München (DE)**

Remarks:
This application was filed on 24.04.2026 as a divisional application to the application mentioned under INID code 62.

(54) **APPARATUS FOR SPECTRALLY COMBINING BROADBAND LASER BEAMS BY VOLUME BRAGG GRATINGS**

(57)    A spectral beam combiner (50) comprises at least one transmitting volume chirped Bragg grating, TVCBG, (24, 62) configured to diffract a first broadband beam (42, 66) propagating at one central wavelength, which satisfies the Bragg condition, and incident on the TVCBG (24, 62) at one of (+) (-) Bragg angles, transmit at least one second broadband beam (40, 68) propagating at a second central wavelength, which does not satisfy the Bragg condition, and incident on the TVCBG (24, 62) at the Bragg angle which is opposite to the one Bragg angle of the first broadband beam (42, 66), and combine the diffracted first (42, 66) and transmitted second (40, 68) broadband beams into a first single high-power collimated broadband output beam. The spectral beam combiner (50) further comprises a first thermal lens compensator, wherein a thermal lens is induced in the one TVCBG (24, 62) by one of or both first and second broadband beams (40, 42, 66, 68). The first thermal lens compensator includes a holographic achromatic broadband phase mask, HAPM, recorded in a designated PTR, photo-thermo-refractive, glass plate (35) which is located downstream from the one TVCBG (24, 62) or recorded in a PTR glass plate (35) with the one TVCBG (24, 62) and/or a pair of holographic phase masks, HPM, which are aligned at respective opposite Bragg angles upstream from the one TVCBG (24, 62), the HPMs diffracting the second broadband beam (40, 68) while converting a Gaussian intensity profile thereof to a donut-shaped intensity profile.

FIG. 4

EP 4 764 636 A2

## Description

BACKGROUND OF THE DISCLOSURE

Field of the Disclosure

The present disclosure relates to laser-beam combining techniques. In particular, the disclosure relates to a beam combining system including at least one transmission volume Bragg grating (TVBG) which spectrally combines high power broadband laser beams into a high-power high-brightness broadband collimated beam.

Background Art Discussion

Numerous industrial and military applications require high power laser beams. Typically, high power single mode (SM) and low mode (LM) laser beams, i.e., high quality laser beams, are in particular demand for a variety of applications. However, nonlinear and thermal effects restrict power of a stand-alone SM laser with narrow bandwidth (up to 3 nm) to about 1 kW, while a SM laser with broad bandwidth (4 nm to 10 nm) can output up to 10 kW. The limited scalability has a variety of reasons including, among others, finite pump brightness, limited doping concentrations and non-linear effects. While waveguide designs of SM fiber lasers may somewhat mitigate the detrimental effects of Raman and Brillouin nonlinear effects which increases the scalability limit, the fiber core diameter nonnegotiably curtails this limit.

The high-power limit can be much higher if two or more SM outputs from respective fiber lasers are combined together. Various methods of beam combining include, among others, coherent (CBC) and spectral (SBC) beam-combining techniques.

The CBC is realized by mutually coherent beams, i.e., the beams which propagate at the same wavelength such that the phase difference between/among their respective waves is constant. This technique requires controlling relative phases of SM beams from respective sources so as to provide constructive interference between the output beams. The phase control includes active or passive feedback providing for a stable coherent addition. However, the required control increases a structural complexity of the CBC system.

The SBC or wavelength beam combining is an incoherent beam combining technique which does not require controlling the phase. The goal of SBC is to combine two or more high-power laser beams propagating at respective different wavelengths into a combined beam which has not only a high power, but also preserved beam quality which determines spatial brightness. Thus, while the spectral brightness in a spectral combining system based on VBGs decreases because of the spectral broadening, the spatial brightness increases by transmitting a beam at a non-resonant wavelength and diffracting a beam at a resonant (Bragg) wavelength, explained in detail below. Based on foregoing, the main advantage of SBC over CBC is the structural simplicity since there is no need to monitor and adjust the phases of individual beams.

Both CBS and SBC employ spectrally dispersive optical elements including, among others, prisms, surface diffractive gratings and volume Bragg gratings (VBGs). The prisms and surface diffractive gratings require the use of narrow band laser sources because the angular dispersion of these elements results in dramatic increase of divergence in a plane of refraction or diffraction. Yet, as mentioned above, the narrowband lasers output a limited-power beam. To obtain higher powers, for example 2 kW to 100 kW, a great number of SM narrow-band lasers should operate simultaneously. However, a multi-laser system has quite a few optical and dimensional problems.

The VBGs can be recorded in a photo-thermo-refractive (PTR) glass which is known to function well under kW-level power loads. The fabrication of these gratings includes holographically recording the interference fringe pattern. The thermal treatment of the exposed glass sample produces a permanent spatial refractive index modulation (RIM) inside it.

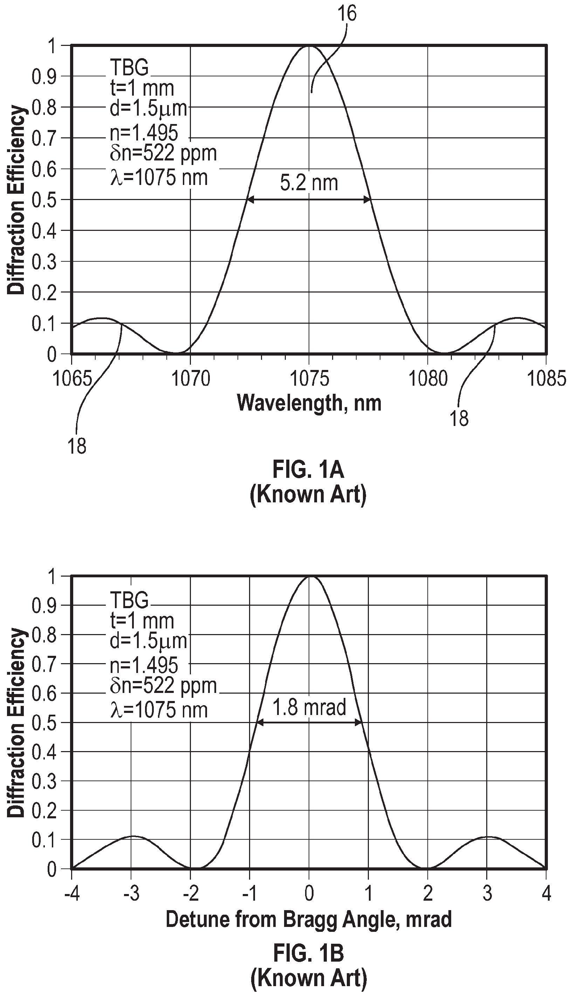

The diffraction of light in the VBG occurs only at a resonant (Bragg) wavelength and two specific angles of incidence known as "+" and "-" Bragg angles. These conditions are known as Bragg conditions. The diffraction efficiency of the VBG, depending on the angle of incidence and wavelength, has a central lobe 16 and a number of side lobes 18 separated by zeros, as illustrated in FIGs. 1A and 1B. If a beam at a 1075 nm wavelength is incident on this grating at one of the Bragg angles, the VBG diffracts it with maximum diffraction efficiency. When another beam at, for example 1069.3 nm wavelength, which corresponds to one of the zeros of the spectrum, illuminates the VBG at the other Bragg angle for the 1075 nm wavelength, the VBG transmits this beam in the same direction as the diffracted 1075 nm beam.

The graphs of respective FIGs. 1A and 1B illustrate a VBG designed with a period A of 1.5 $\mu$m and thickness of 1 mm. As can be seen, the illustrated VBG has 100 % diffraction efficiency for radiation at 1075 nm (Bragg or resonant wavelength) which is launched at 32.6 ° (Bragg angle in the air). The full-width half-maximum (FWHM) wavelength and angular selectivity are $\Delta\lambda$=5.2 nm and $\Delta\theta$=1.8 mrad, respectively. The modelling of VBG properties is based on the coupled wave theory well known to one of ordinary skill in the laser arts.

There are two basic types of VBG: transmission VBG (TVBG) and reflection VBG (RVBG) both providing diffraction of light which satisfies the Bragg condition. The TVBG and RVBG have different capabilities of combining beams. The standard RVBGs effectively combine only narrowband beams with a spectral width not exceeding a small fraction of nanometer which limits RVBGs usefulness for broadband high power laser systems.

In contrast to RVBGs, TVBGs can effectively diffract radiation that has a broad spectral width ranging from above 3 nm to 10 nm (and greater) which is quite typical for SM fiber lasers outputting a 2 to 10 kW SM beam in a 1 $\mu$m wavelength range. Based on the foregoing, the TVBG's ability to diffract high-power, broad spectral width radiation renders this type of gratings particularly attractive for combining high-power broadband beams. If a TVBG diffracts one beam with maximum efficiency at, for example, a (+) Bragg angle and transmits another beam at the opposite (-) Bragg angle, diffracted and transmitted beams merge into a combined collimated high-brightness beam.

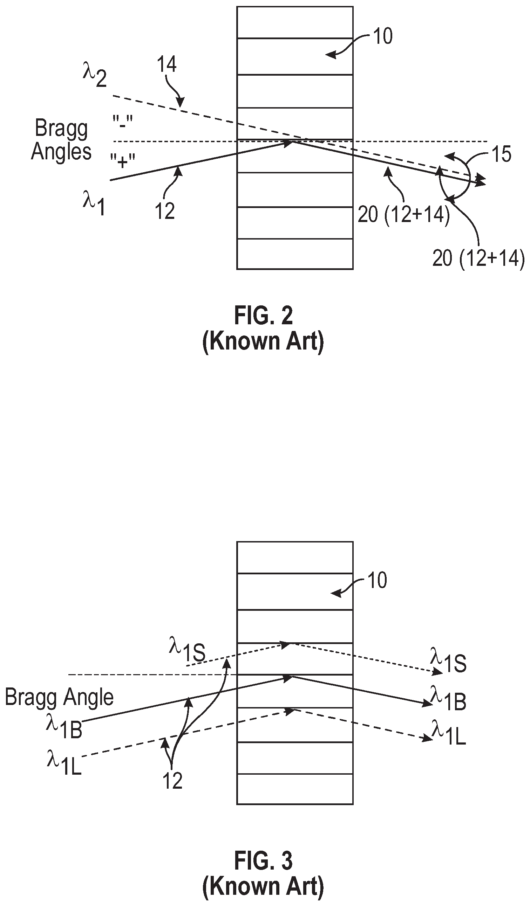

FIG. 2 illustrates the operation of TVBG 10 combining two laser beams 12 and 14 at two different wavelengths $\lambda1, \lambda2$ respectively which are incident on the same side at "+" and "-" Bragg angles for the $\lambda1$ wavelength. The beam 12 at the $\lambda1$ wavelength corresponding to 1075 nm in FIG. 1A, is in resonance with the grating and is mostly diffracted (deflected by twice the Bragg angle). The second beam 14 at the second $\lambda2$, for example 1069.3 nm, is in the first minimum (or zero) of the diffraction efficiency curve and passes through TVBG 10 with a minimal loss. In other words, TVBG 10 does not meaningfully diffract beam 14, but transmits it. Ideally, diffracted beam 12 and transmitted beam 14 would be overlapped and collinear both in near and far optical fields, i.e., merged into a single output collimated spatially bright beam 20. But the reality is different since diffracted beam 12 is fanned at the output as shown by double-arrow 15 and explained below.

Using a TVBG for combining broadband beams poses a few problems. The root of at least some of these problems is a beam divergence. It causes decreasing the beam's power density and spatial brightness of the combined beam. The following explains physical phenomena causing the beams diffracted by the TVBG to diverge.

As one of ordinary skill knows, any grating introduces angular dispersion illustrated in FIG. 3. In fact, the angular dispersion is perhaps one of the most attractive features of any type of grating exactly because of its spectral selectivity. To understand the nature of the latter, imagine a single polychromatic collimated beam at the Bragg wavelength, such as beam 12 incident on TVBG 10 at the Bragg angle. The polychromatic beam 12 consists of slightly offset spectral components $\lambda1L$ and $\lambda1S$ (long/dashed and short/dotted wavelengths, respectively) which are centered on solid wavelength $\lambda1B$ (Bragg wavelength). While all spectral components in the incident beam are parallel, TVBG 10 diffracts the entire beam, where different wavelengths $\lambda1L$, $\lambda1S$ and $\lambda1B$ are deflected at respective different angles. Both short/dotted and long/dashed wavelengths $\lambda1S$ and $\lambda1L$ spectral components, respectively diverge from the resonant Bragg component. This ability of the grating to recognize different wavelengths makes it so attractive for a variety of applications.

However, the above-mentioned feature of the grating is undesirable when it functions as a beam combiner. Yes, the spectral selectivity of the grating is still paramount to the beam combining, but the fact that the diffracted beam diverges is highly undesirable for the purposes of this invention as explained herein below.

The divergent or fan-shaped beam has a lower spatial brightness. Yet many industrial applications require high spatial brightness beams in which its spectral components are all parallel. These beams are known as collimated near diffraction-limited beams. The angular dispersion is an inherent property of volume Bragg gratings in general and is therefore not limited to standard periodic TVBGs but also occurs in transmitting volume chirped Bragg gratings (TVCBGs).While both type of gratings are thus affected by angular dispersion, a TVCBG interacts with a diffracted beam in a manner different from that of the periodic TVBG, as explained herein below.

Another problem associated with periodic and chirped TVBGs is a thermal lensing phenomenon affecting the beam's divergence. When a high-power laser beam propagates through a VBG, the latter partially absorbs the beam which then releases light energy heating the VBG. The heating causes a change of refractive index and expansion of PTR glass. The temperature distribution in the VBG is not uniform which leads to the formation of a lens. Hence, this phenomenon is known as thermal lensing.

The thermal lensing distorts the divergence and quality of the diffracted beam which has the highest power density in its central regions and low power density in the wing regions. To compensate for the lens, various phase masks are successfully used. Yet, the known phase masks all are monochromatic and cannot shape effectively broadband beams.

Still another problem associated with TVBGs (and TVCBGs) used for combining broadband beams is leakage between spectral channels or beams. Returning to FIG. 2, the leakage occurs when transmitted beam 14, i.e., the beam which should propagate without being diffracted, is still partially diffracted. To avoid it, the spectral width of TVBG 10 must be broad enough to diffract broadband beam 12, but not beam 14. For that side lobes 18 of FIG. 1A, which spread to wider spectral range, should be somewhat suppressed and better yet completely removed. The amplitude of side lobes is inherent to VBGs with a uniform distribution of refractive index modulation (RIM) in the volume of PTR media. To avoid significant leakage between spectral channels, the distance between them should be at least $3\Delta\lambda$. This means that for Yb-doped fiber lasers, which are important for many industrial applications, maximum three to four channels/laser sources could be used for effective SBC. However, the limited number of sources curtails the power scalability of TVBGs.

The publication by L. Hao et al.: "Optimization research of transmitting volume Bragg gratings for spectrum beam combining"; 2012, 17th Opto-Electronics and Communications Conference (OCC), IEEE, 2 July 2012, pp. 663-664, XP032223337, DOI: 10.1109/OECC.2012.6276780 describes applications of transmitting Volume Bragg Gratings.

The publication by A. Oleksiy: "Dense Spectral Beam Combining with Volume Bragg Gratings In Photo-thermo-refractive Glass" In: "Dissertation", 1 January 2009, University of Central Florida, US, XP055938674, relates to beam combining techniques using Volume Bragg Gratings.

Based on the foregoing it is desirable to have a TVCBG- and TVBG-based beam combiner, utilizing an SBC technique for combining broadband beams into a combined high-power, high-brightness collimated beam, which is configured to:

minimize or preferably eliminate the effect of the angular dispersion on diffracted beams,
minimize the lensing effect, and
minimize the leakage among multiple broadband beams (or channels).

SUMMARY OF THE DISCLOSURE

According to an aspect, the present invention solves the above problem by providing a spectral beam combiner according to the independent claims. Further aspects of the invention are set forth in the dependent claims, the drawings, and the description of embodiments. Aspects of the disclosed combiner address the above-mentioned problems and satisfy the existing needs.

The inventive structure eliminates the angular dispersion of the TV(C)BG. Some of the configurations dealing with the angular dispersion include a single TVCBG. Other configurations relate to a pair of two identical periodic TVBGs.

The TVCBG is a structure with a gradually varying period of the spatial refractive index modulation (RIM). The TVCBG is capable of diffracting different wavelengths from different areas of the TVCBG and of controlling their diffraction angles. Therefore, a single properly designed TVCBG is capable of compensating the angular dispersion in the diffracted beam. As a beam combiner, the TVCBG, recorded in a PTR glass, transmits a first broadband beam incident thereon at one of (+) (-) Bragg angles and diffracts a second broadband beam at the other, opposite Bragg angle. The diffracted and transmitted beams merge with one another into a collimated broadband output beam.

The above-disclosed configuration can include a plurality of TVCBGs which are arranged to combine three and more broadband beams. In this configuration, the first upstream TVCBG outputs a single broadband collimated broadband beam including the first and transmitted second beams. The first collimated broadband beam is incident on at least one downstream TVCBG which transmits this beam without distortion. However, the downstream TVCBG, like the upstream TVCBG, compensates for the angular dispersion of the third broadband incident thereon. As a result, all three beams merge into a high brightness high power broadband collimated beam at the output of the downstream TVCBG. The number of TVCBGs is unlimited. If desired, one or more TVCBGs can effectively operate in combination with one or multiple pairs of periodic TVBGs.

The TVBGs of each pair are spaced apart along a light path and aligned at respective "+" and "- " Bragg angles. The upstream TVBGs diffracts a first beam which is incident thereon at, for example, "+" Bragg angle. Due to the inherent angular dispersion, the beam's spectral components diverge at the output of the TVBG. Upon launching the diffracted first beam to the downstream TVBG at the "- " Bragg angle, its spectral components again are diffracted, but in the direction opposite to that provided by the upstream TVBG. Thus, the dispersion effects in respective TVBGs cancel out each other. This allows the downstream TVBG to output a multi-KW collimated broadband output beam at the same angle as the incident Bragg angle of the beam incident on the upstream TVBG.

The downstream TVBG thus functions as a combining TVBG for the diffracted and second transmitted broadband beams. The second beam is centered on a wavelength different from the Bragg wavelength of the first beam and is directly incident on the downstream TVBG which transmits it. The twice-diffracted first and transmitted second beams overlap one another in both near and far optical fields thus merging into an output spatially bright broadband collimated beam. As one of ordinary skill readily understands, the number of aligned pairs of TVBGs is not limited to just a single pair and can include multiple pairs which are positioned so that multiple broadband beams eventually overlap one another in the utmost downstream TVBGs outputting a single high-brightness high-power combined beam.

Still another configuration takes advantage of the PTR glass which allows recording several standard TVBGs in a single glass plate. While the TVBGs completely overlap each other within the plate, they are optically independent. Accordingly, this configuration has two upstream "-" and "+" TVBGs which diffract respective beams at Bragg wavelengths which are offset from one another. The diffracted beams then are incident on respective "+" and "-" downstream TVBGs written in the same glass plate. The twice-diffracted beams overlap one another while exiting the PTR glass so as to form a single high power broadband collimated output beam.

The aspect of the disclosure addressing the leakage problem includes forming a specified (e.g. Gaussian) profile of RIM in the direction perpendicular to the grating vector which results in suppression of side lobes. In particular, the disclosed TVBG is configured with an optimized apodization (or spatially non-uniform coupling) profile enabling almost a complete suppression of side lobes which may lead to the decreased distance between channels and therefore increased number of these channels.

Another aspect of the disclosure deals with a thermal lensing compensation in the above-disclosed broadband beam combiner including TVCBGs and TVBGs. One of the configurations that minimizes the thermal lensing phenomenon includes the inventive combiner configured with the smallest possible thickness. The latter decreases absorption of radiation limiting thus heat generation, accelerates thermal conductivity to the surfaces, reduces the optical path, and increases the focal length of the lens.

Other configurations minimizing the temperature gradient across the TVBG (and TVCBG) are based on shaping a SM broadband beam so that its Gaussian intensity distribution is transformed to a flat top intensity distribution. The lower the power density gradient between the central and wing regions of the SM beam, the more uniform the heat generation in the grating. The flat top beam has a substantially constant power density through the beam's cross-section which is about half the peak power of the Gaussian beam. However, the average power is practically the same.

One of these beam-shaping configurations includes the inventive combiner configured with a holographic achromatic phase mask created in a dedicated PTR glass plate which is positioned along a light path downstream from the combining TVBG (or single TVCBG). In contrast to the known monochromatic masks, the holographic mask effectively operates with broadband beams. It is possible to have a TVBG or TBCBG and mask in the same PTR plate.

In accordance with another configuration of this aspect, the beam combiner disclosed in the above-discussed aspects additionally includes a separate holographic phase mask which transmits a broadband SM beam while converting it to an optical vortex (Laguerre-Gaussian beam). When the converted beam merges with a diffracted beam, the radial intensity distribution of the combined beam assumes the flat top profile.

Still other aspects, embodiments, and advantages of these example aspects and embodiments, are disclosed in detail below. Moreover, both the foregoing information and the following detailed description are merely illustrative examples of various aspects and embodiments, and are intended to provide an overview or framework for understanding the nature and character of the claimed aspects and embodiments. The features of respective configurations illustrating any of the above-disclosed aspects can be fully incorporated in any of the configurations representing two other disclosed-above aspects.

BRIEF DESCRIPTION OF THE DRAWINGS

The above and other features will become more apparent with reference to the accompanying figures, which are not drawn to scale. The figures provide an illustration and a further understanding of the various aspects and configurations, and constitute a part of this specification, but do not represent the limits of any particular configuration or aspect. In the drawings, each identical or nearly identical component that appears in various figures is denoted by a like numeral. For purposes of clarity, not every component may have the same reference numeral. In the figures:

FIGs. 1A and 1B illustrate dependence of diffraction efficiency of an exemplary periodic TVBG on wavelength and angle of incidence, respectively.

FIG. 2 illustrates spectral combining by a single periodic TVBG.

FIG. 3 illustrates the angular dispersion of spectral components of a broadband beam diffracted by the TVBG of FIG. 2.

FIG. 4 illustrates ray tracing of multiwavelength plane wave diffraction by a TVCBG aligned at a positive Bragg angle.

FIG. 5 illustrates ray tracing of multiwavelength plane wave diffraction by the TVCBG of FIG. 4 aligned at a negative Bragg angle.

FIG. 6 illustrates another exemplary configuration configured in accordance with the inventive concept to combine spectrally three broadband beams centered at respective different wavelengths by the TVCBGs of FIGs. 4 or 5.

FIG. 7 illustrates the inventive configuration including two sequentially positioned TVBGs which, in combination, eliminate the angular dispersion of spectral components of a polychromatic beam.

FIG. 8 illustrates ray tracing of multiwavelength plane wave diffraction with the wave being incident on a TVBG at a positive Bragg angle.

FIG. 9 illustrates the dependence of the diffraction angle in the TVBG of FIG. 8 on wavelength for excitation at Bragg angle for a 1075 nm wavelength.

FIG. 10 illustrates ray tracing of multiwavelength plane wave diffraction with the wave being incident on the TVBG at a negative Bragg angle.

FIG. 11 illustrates ray tracing of multiwavelength plane wave diffraction at two sequential TVBGs of respective FIGs. 8 and 10.

FIG. 12 illustrates one exemplary optical configuration configured to combine two broadband high-power beams into a single broadband high-power high-brightness collimated output beam in accordance with the inventive concept.

FIG. 13 illustrates another exemplary optical configuration configured to combine multiple broadband high-power beams into a single broadband high-power collimated output beam.

FIG. 14 illustrates still another exemplary optical configuration configured to combine multiple broadband high-power beams into a single broadband high-power collimated output beam with a multiplexed TVBG.

FIG. 15A illustrates experimentally obtained divergence of a superluminescent diode beam (M2=1) after "+" Bragg diffraction at the first TVBG of FIGs. 7 or 11.

FIG. 15B illustrates experimentally obtained divergence of a superluminescent diode beam (M2=1) after sequential "+" Bragg diffraction at the first TVBG and "-" Bragg diffraction at the second TVBG of FIGs. 7 or 11.

FIG.16 illustrates the emission spectrum of a typical high power SM beam of an Yb-doped fiber laser modelled with Gaussian function.

FIG. 17A illustrates the inventive beam combiner of FIGs. 7 to 14 configured to combine beams at respective 1060 nm 1070 nm and 1080 nm wavelengths.

FIG. 17B illustrates emission spectra of three laser sources of FIG.16 with different central wavelengths and diffraction efficiency spectra of respective upstream and downstream gratings of the inventive combiner of FIG. 17A.

FIG. 17C illustrates the dependence of diffraction efficiency on incident angle for uniform and apodized TVBGs.

FIG. 18 illustrates the quality of 1 KW SM beam diffracted by the TVBG in the horizontal plane of diffraction (Mx) and in vertical plane (My).

FIG. 19 illustrates the inventive combiner of FIGs. 7 to 14 and 17A configured with a holographic achromatic phase mask for compensating the undesirable effects of the thermal lens produced in combining TVBGs by high power broadband beams.

FIG. 20 illustrates the inventive combiner of FIGs. 7 to 14 and 17A configured with a holographic phase mask or masks for converting a Gaussian beam (TEM00) to a collimated optical vortex for minimizing the deleterious effects of the induced thermal lens in a combining TVBG.

FIG. 21 illustrates radial intensity distribution profile in a combining TVBG multiplexing a diffracted Gaussian beam and a transmitted vortex beam.

FIG. 22 illustrates the dependence of RIM required for 100 % diffraction efficiency of a TVBG on the TVBG's thickness.

SPECIFIC DESCRIPTION

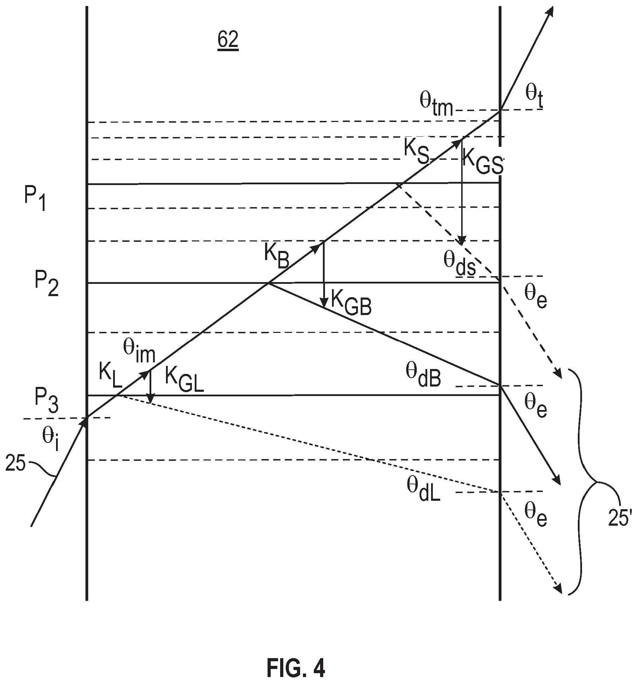

FIGs. 4 to 13 illustrate respective configurations addressing the angular dispersion-dependence of the diffraction angle on wavelength - and its role in spectral beam combining. The angular dispersion is an inherent characteristic of VBGs. Physically, the angular dispersion is responsible for the increased divergence of and thus decreased spatial brightness of a polychromatic beam diffracted in a VBG. When a VBG operates as a beam combiner combining a plurality of broadband beams, the angular dispersion detrimentally affects the spatial brightness of the combined beam. The broadband beams are typically associated with high power lasers including, for example, fiber lasers. Yet the disclosed subject matter is fully applicable to other types of lasers. Note that while SM lasers are of particular interest here, the inventive concept covers multimode (MM) lasers as well. Furthermore, while the following exemplary embodiments are described primarily with reference to Yb-doped fiber lasers operating in the 1 μm wavelength range, the disclosed beam combining principles are applicable across the transparency range of PTR glass extending from approximately 205 nm to 3500 nm, encompassing ultraviolet, visible and mid-infrared laser sources.

Turning to TVCBGs, FIG. 4 shows ray tracing for multiwavelength collimated incident beam 25 diffracted at the positive Bragg angle by a TVCBG 62. Different spectral components of beam 25 are diffracted at respective locations in TVCBG 62 where grating lines P1, P2 and P3 correspond to the Bragg condition for respective spectral components. In this case, diffraction angles $\theta dS$, $\theta dB$ and $\theta dL$ for respective spectral components are identical because the Bragg wavelength is proportional to a grating period A ( $\sin \theta_{dB} = \frac{\lambda_B}{2nd}$ ). This means that diffracted beam 25' is collimated. The diffraction of different spectral components results in the induced ellipticity of the diffracted beam.

In particular, FIG. 4 illustrates ray tracing of diffraction at the positive Bragg angle in TVCBG 62 for three spectral components: central Bragg condition ($\lambda$B, KB), longer wavelength ($\lambda$L, KL), and shorter wavelength ($\lambda$S, KS). The KGS, KGB and KGL are respective grating vectors at respective areas P1 to P3 inside TVCBG 62. The $\theta i$-incident angle in air, $\theta im$-incident angle in medium, $\theta dB$-diffraction angle for a resonant wavelength in medium (Bragg angle), $\theta dL$ and $\theta dS$-diffraction angles in medium for longer and shorter wavelength, $\theta e$-exit angles in air, $\theta tm$-transmission angle in medium, $\theta t$-transmission angle in air. Thus, a broadband collimated beam diffracted by a properly designed single TVCBG 62 remains collimated. In summary, a single TVCBG recorded in a PTR glass operates as a dispersion compensator and a beam combiner for the shown beam and another beam (not shown here) incident on TVCBG 62 at the negative angle.

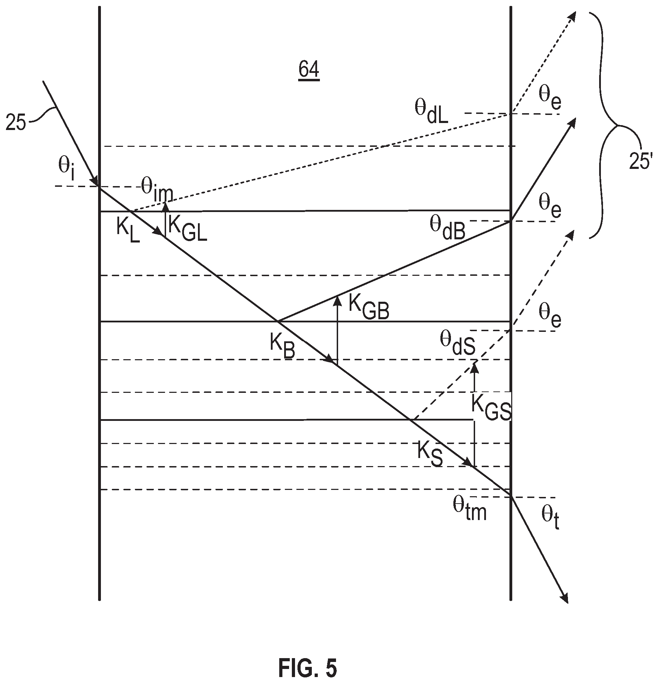

FIG. 5 illustrates TVCBG 64 configured similarly to that of FIG. 4, but aligned for the negative Bragg angle of incident beam 25. It is easy to see that the diffraction mechanism is the same as that of FIG. 4. A skilled person readily understands that a second beam incident on either of TVCBG 62, 64 at the opposite angle merges with the collimated diffracted beam into a collimated broadband output beam.

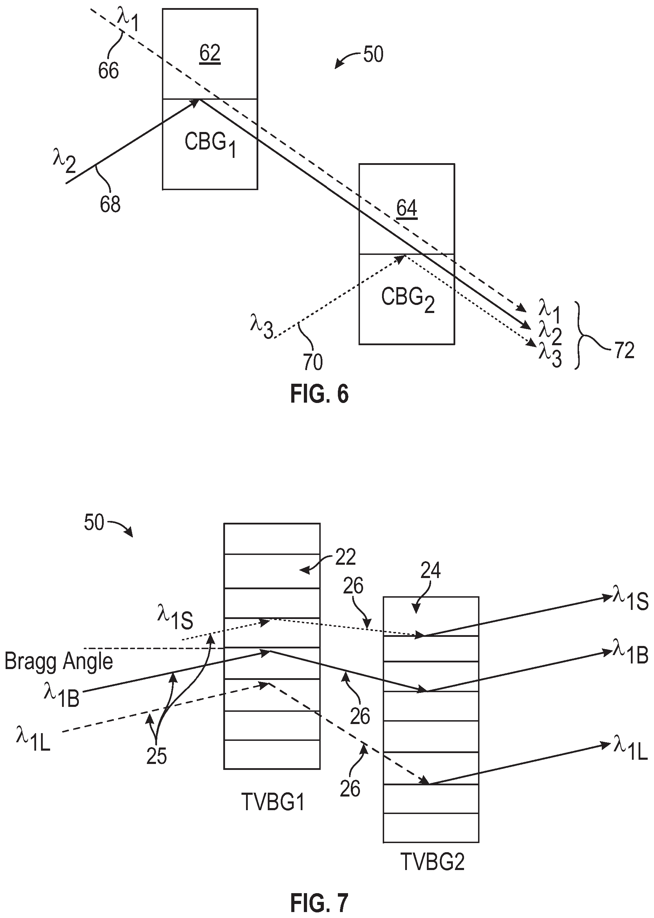

FIG. 6 illustrates a beam combiner 50 providing spectral combining of three broadband beams 66, 68 and 70 centered at respective $\lambda$1, $\lambda$2 and $\lambda$3. The combiner 50 includes sequential upstream and downstream TVCBG (CBG1) 62 and TVCBG (CBG2) 64 aligned for respective opposite Bragg angles. The upstream TVCBG 62 transmits beam 66 incident thereupon at a (-) Bragg angle and including λ1 spectral components without changing the direction of its propagation. However, TVCBG 62 diffracts an input beam 68 having a plurality of spectral components λ2 such that these components remain parallel to one another. As a result, single TVCBG 62 combines transmitted and diffracted beams 66, 68 respectively into a first combined collimated broadband beam, including λ1 and λ2 spectral components.

If additional third broadband 70 needs to be combined with the first combined one, a downstream TVCBG 64 is installed downstream from TVCBG 62. The TVCBG 64 intercepts the first combined beam, which is incident thereon at the negative Bragg angle, and transmits this beam without distortion. The broadband beam 70, in turn, is incident on downstream TVCBG 64 at the positive Bragg angle and is diffracted such that all spectral components λ3 of this beam exit TVCBG 64 are parallel to one another and parallel to λ1 and λ2 spectral components of the first combined broadband beam. As a result, beam combiner, TVCBG 64 outputs a high power high spatial brightness broadband collimated output beam 72.

The beam combiner 50 configured with two or more TVCBGs 62, 64 operates with high diffraction efficiency if the spectral width of the grating is equal or larger than that of a laser beam while the distance between spectral beams/channels is larger than that of the spectral width of each TVCBG. A plurality of additional TVCBGs can be placed anywhere along a light path. Each TVCBG functions as both a dispersion compensator and beam combiner. Also, one or multiple pairs of periodic TVBGs located before or after a TVCBG can be further added to any of the schemes of respective FIG. 4 to 6.

FIG. 7 illustrates a configuration related to periodic TVBGs which are arranged in one or more pairs for eliminating angular dispersion. In the following description of periodic TVBGs, the incident beam is again denoted as beam 25 for generality, it being understood that this beam is distinct from the incident beam of the TVCBG embodiments of FIGs. 4 to 6 and may propagate at a different central wavelength. The TVBGs 22 and 24 are identical and sequentially aligned for respective "+" and "-" Bragg angles along a light path so as to output a broadband beam 28 which is collimated, i.e., not fan-shaped. Note that output beam 28 propagates parallel to an input polychromatic beam 25 which is incident on upstream TVBG 22 at a positive Bragg angle.

The illustrated configuration operates in the following manner. The incident beam 25 is first diffracted upon coupling into upstream TVBG 22. The angular dispersion of TVBG 22 causes a fan of spectral components 26 at the output of the grating. As can be seen, the solid central Bragg wavelength is diffracted at the double Bragg angle, the long/dashed and short/dotted wavelengths (or spectral components) of fan-shaped beam 26 are output at respective angles relative to the Bragg angle. The fan-shaped beam 26 is further incident on downstream TVBG 24 at a negative Bragg angle. Consequently, downstream TVBG 24 reverses the angles at which respective long and short wavelengths have been diffracted in upstream TVBG 22 and outputs collimated broadband beam 28. In other words, the effects of angular dispersion in respective TVBG 22, 24 cancel out each other. The width of collimated output beam 28 in a plane of diffraction is greater than that of incident beam 25 because in TVBGs different spectral components have different lateral displacement. However, the increased width does not notably affect the target since the light power density does not decrease in the far field of beam 28, as explained in detail below.

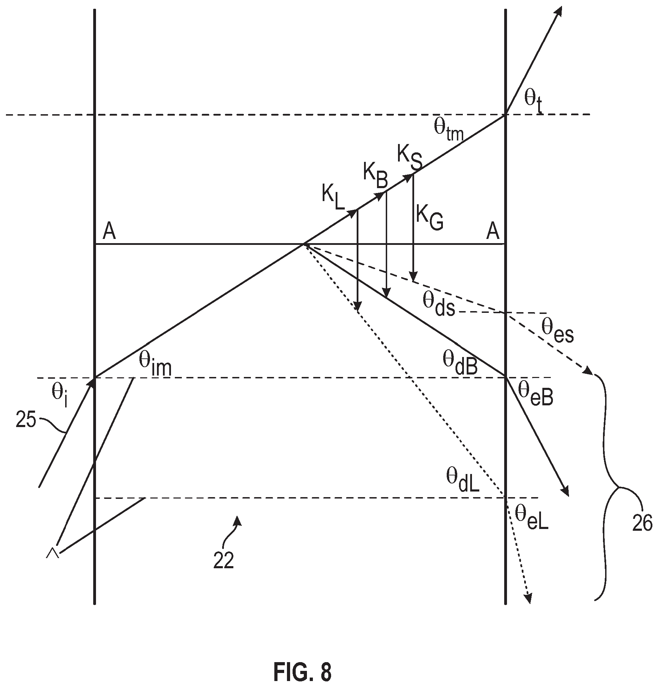

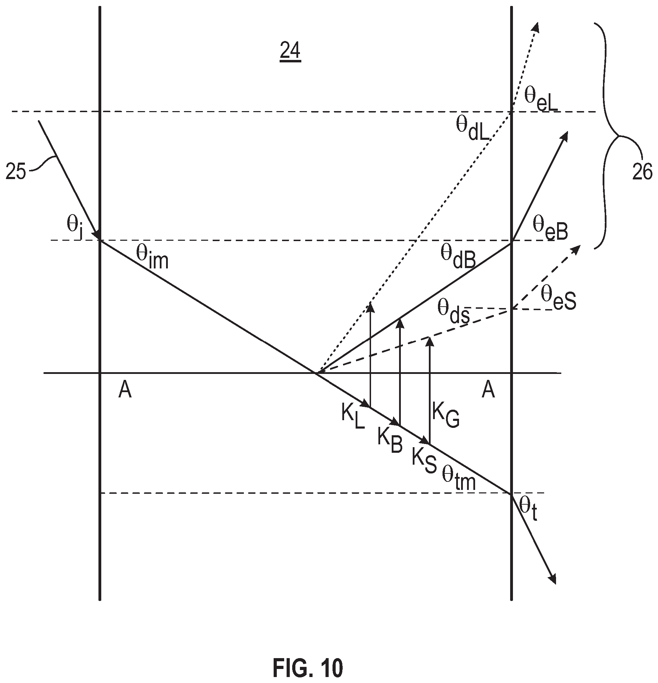

A more detailed explanation of the angular dispersion and a mechanism for compensating it in periodic TVBGs are discussed in reference to FIGs. 8 to 11. In particular, FIGs. 8 and 10 illustrate ray tracing for diffraction of a multiwavelength plane wave in respective TVBGs 22 and 24 of FIG. 7. For simplicity, TVBGs 22, 24 each are a symmetric VBG where a grating vector (KG) is perpendicular to the surface normal. The grating vector KG expresses the direction and period of the grating. As a skilled person readily understands, the grating vector may not be perpendicular to the surface, but be inclined at an arbitrary angle. The angular dispersion phenomenon in VBGs in a way defies perhaps one of the most known laws - the law of reflection in accordance with which the angle of incidence equals the angle of reflection. In contrast, here while spectral components in the beam incident on a TVBG are all parallel to one another, they diverge at respective different angles providing the output beam with a fan-shaped form.

FIG. 8 illustrates ray tracing of diffraction at positive Bragg angle in upstream TVBG 22 for a resonant wavelength in Bragg condition ($\lambda B$, KB) selected from a 205 nm to 3500 nm wavelength range, for longer wavelength ($\lambda L$, KL), and for shorter wavelength ($\lambda S$, KS). KG is a grating vector. $\theta i$-incident angle in air, $\theta im$-incident angle in medium, $\theta dB$-diffraction angle for a resonant wavelength in medium (Bragg angle), $\theta dL$ and $\theta dS$-diffraction angles in medium for longer and shorter wavelength, $\theta e$-exit angles in air, $\theta tm$-transmission angle in medium, $\theta t$-transmission angle in air, A-A line is a plane of constant refractive index.

The positive Bragg diffraction is the diffraction where an angle between KG and KB is positive (counter clockwise). A diffraction angle is determined as a vector sum of a grating vector and a particular wave vector - fan-shape beam. For a symmetric VBG, incident and diffraction angles in medium for a Bragg wavelength (solid lines) are equal, i.e., $\theta im = \theta dB$. Therefore, the exit angle of diffracted central spectral component - Bragg wavelength - is equal to the incident one $\theta i = \theta eB$. For spectral components of incident beam 25 propagating in the same plane wave but detuned from the Bragg wavelength, symmetry is destroyed because of different lengths of wave vectors. Hence, for the detuned wavelengths (shorter λS and longer λL) which is excited at a Bragg angle for wavelength λB, respective diffraction angles are not equal to the incident angle. Accordingly, a fan of spectral components of output beam 26 acquires a divergence in the plane of diffraction where direction of spectral components propagation sweeps in a negative direction (clockwise) while wavelength increases.

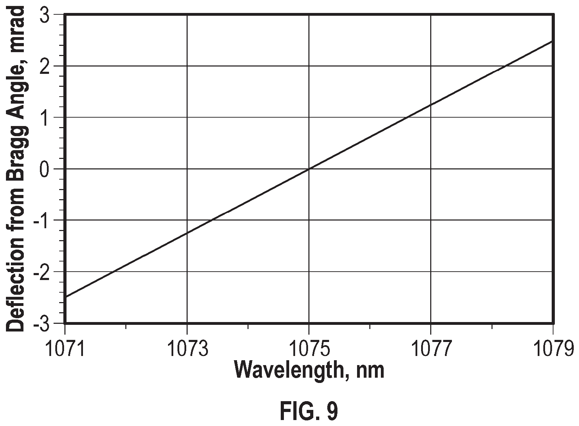

FIG. 9 illustrates the dependence of diffraction angle in TVBG 22, recorded with a 1 μ period A, on wavelength. In the illustrated graph, the vertical axis is the deflection from the diffraction angle for a resonant wavelength 1075 nm (θd, λ-θd, 1075). As can be seen, detuning for a few nanometers results in a few milliradian deflection. For high quality laser beams with the diameter exceeding a few millimeters, diffraction-limited divergence is less than a milliradian. The graph clearly illustrates that angular dispersion of TVBGs, diffracting broadband SM laser beam 25 of FIG. 8, significantly increases the beam's divergence.

FIG. 10 illustrates ray tracing of diffraction at a negative downstream Bragg angle in TVBG 24. The mechanism illustrated in this figure is identical to that of FIG. 5. However, in contrast to FIG. 8, here polychromatic incident SM beam 25 acquires a divergence in the plane of diffraction where the direction of propagation of spectral components 26 sweeps in the positive direction (counter-clockwise) while wavelength increases.

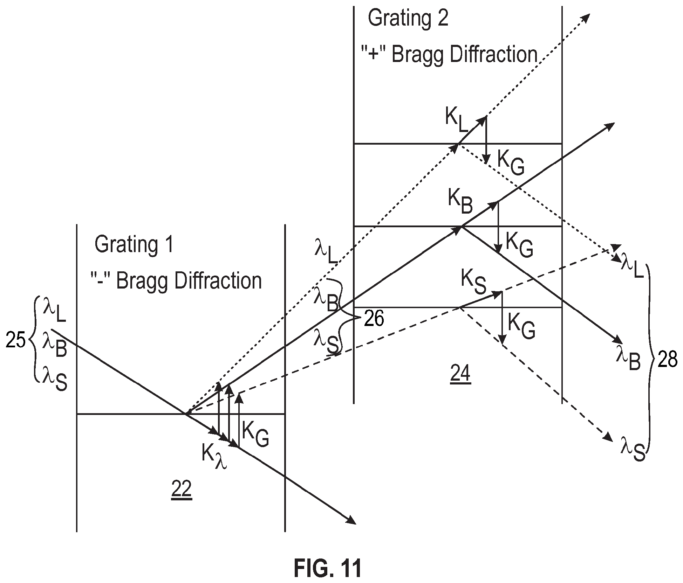

FIG. 11 illustrates the inventive structure based on the combined teaching of above-disclosed FIGs. 8 and 10, respectively. It shows a multiwavelength plane wave diffracted by two sequential identical VBGs 22 and 24, respectively at corresponding negative and positive Bragg angles. The shown configuration eliminates angular dispersion forming thus collimated broadband beam 28. In the figure, for a resonant wavelength in Bragg condition, wavelength and grating vector are denoted λB and KB, for longer wavelength λL and KL, for shorter wavelength λS and KS and KG is a grating vector.

As mentioned above, the inventive configuration causes a lateral walk-off (lateral spectral chirp) of spectral components in a twice-diffracted laser beam and ellipticity in near field. For a beam of 10 mm diameter and angular dispersion of 4 mrad, diameter increase after propagation for 50 mm would be 0.2 mm. This effect causes a small decrease of power density of the beam in near field while does not change power density in far field. Hence, the brightness remains unchanged.

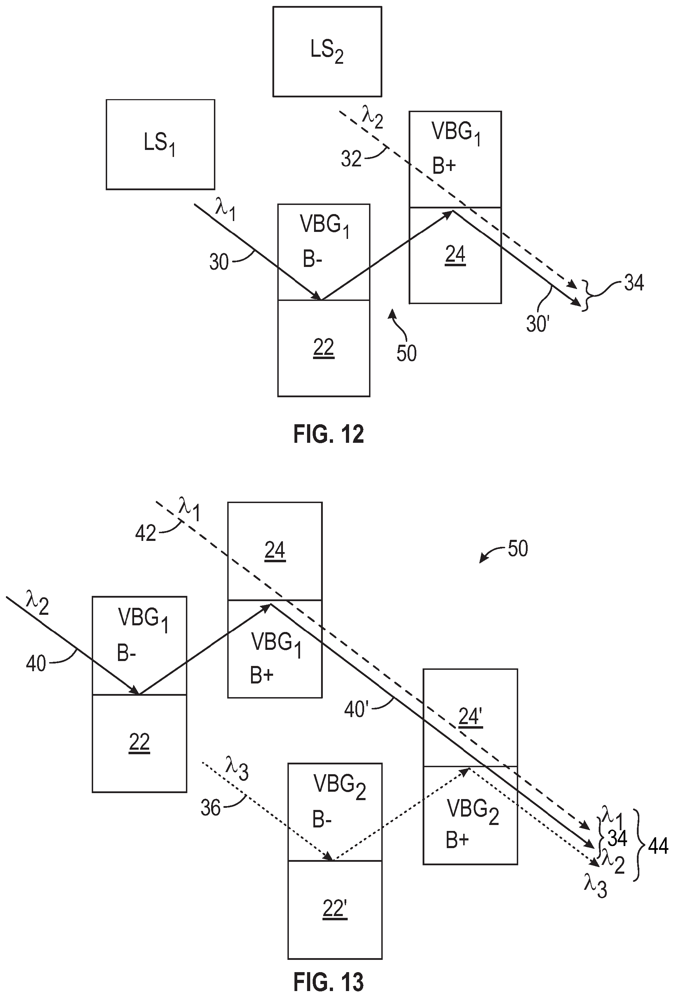

FIG. 12 illustrates a basic configuration of the inventive two-beam combiner 50 based on the teaching of FIGs. 8 to 11. The combiner 50 spectrally combines two broadband beams 30, 32 at respective central wavelengths of λ1 and λ2, which are emitted by respective high power laser sources LS1 and LS2, into a collimated combined beam 34. The configuration includes two identical and sequentially positioned upstream and downstream gratings TVBG1 B- (22) and TVBG1 B+ (24) respectively. The beam 30 is incident on upstream TVBG1 22 at a Bragg angle such that it acquires divergence in the plane of diffraction and exits TVBG 22 as a fan-shaped beam of λ1 spectral components. The fan of λ1 spectral components is further launched on downstream TVBG1 B+ 24 which diffracts them in the opposite angular directions canceling out the angular dispersion which beam 30 acquires in upstream TVBG1 B- 22.

The other beam 32 has spectral components λ2 and is incident on downstream TVBG1 B+ 24 at "-" Bragg angle for λ1, while λ2 is detuned to one of zeros in the diffraction spectrum shown in FIG. 1A. Therefore, beam 32 passes through downstream TVBG1 B+ 24 without diffraction.

FIG. 12, like all other similar figures, shows diffracted and transmitted beams 30, 32 respectively with a lateral shift. However, both beams completely overlap in both near and far fields. While combined output beam 34 (30+32) is characterized by a decreased spectral brightness, the spatial brightness is doubled.

FIG. 13 shows three-beam combiner 50 including multiple TVBGs 22, 24, 22' and 24.' The TVBGs are arranged in respective pairs. One pair includes upstream "- " and downstream "+" TVBGs 22 and 24, respectively, whereas TVBG B- 22' and TVBG B+ 24' define the other pair.

In particular, beam combiner 50 spectrally combines three broadband beams 42, 40 and 36 centered at respective λ1, λ2 and λ3 wavelengths. The upstream and downstream TVBGs 22 and 24 respectively operate identically to those of FIG. 12 and diffract components centered at λ2 of beam 40 twice so as to cancel out the angular dispersion affecting beam 40 in each of TVBGs 22, 24. Accordingly, twice-diffracted output beam 40' is collimated and propagates downstream from TVBG 24 at the same angle as the incident angle of beam 40. The beam 42 has spectral components centered at λ1 that corresponds to one of zeros in a diffraction spectrum of the VBG in FIG. 1A and thus propagates through TVBG 24 without distortion. The beams 42 and 40' overlap each other in both near and far optical fields defining together a first broadband high power collimated output beam 34 consisting of λ1 and λ2 wavelengths.

The other pair of identical TVBGs 22', 24' respectively also operates in accordance with the basic configuration of FIG. 12. The third beam 36 centered at λ3 impinges on upstream TVBG 22' at a negative Bragg angle. The once-diffracted fan-shaped beam 36 undergoes another diffraction in downstream (+) TVBG 24'. The latter combines twice-diffracted collimated beam 36' at λ3 and broadband collimated beam 34 at λ1 and λ2 into a high-brightness and high-power broadband collimated output beam 44. The TVBGs 22, 24 of the first pair and TVBGs 22', 24'of the second pair may be all identical to one another. Alternatively, the TVBGs of the second pair may differ from those of the first pair. For example, the TVBGs of the second pair may be slightly angled relative to the TVBGs of the first pair or have different periods compared to those of the first pair.

It is clear from the configuration of FIG. 13 that the number of combined channels - broadband beams - is unlimited. Eventually, all beams overlap in both near and far fields. The limitation on the number of channels is determined by a total width of lasing medium gain spectrum compared to a spectral width of an individual laser.

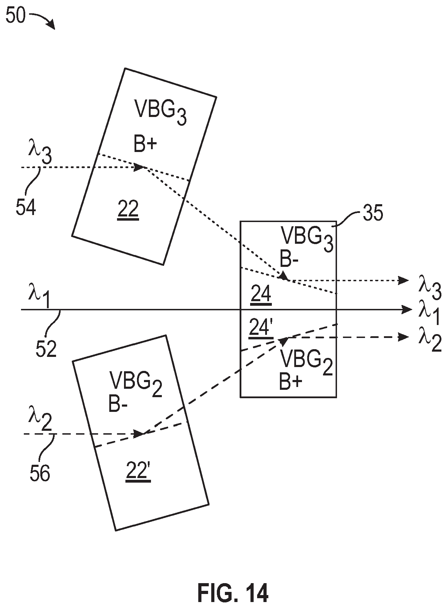

FIG. 14 illustrates yet another configuration of beam combiner 50 operating in accordance with the inventive principles explained, for example, in regard to FIG. 12. However, in contrast to FIG. 12 (and FIG. 13), this configuration includes an odd number of PTR glass plates. This is because a single PTR glass plate can host multiple gratings. Accordingly, the shown configuration includes two upstream TVBGs 22 and 22' each recorded in the dedicated PTR plate. However, downstream TVBGs 24 and 24', which are paired with respective upstream TVBGs 22 and 22', share the same PTR glass plate 35.

The upstream TVBG2 22 and TVBG3 22' diffract respective broadband beams 54, 56 including respective groups of spectral components centered at λ3 and λ2. Once diffracted, respective fans of spectral components centered at λ3 and λ2 impinge on downstream PTR plate 35. The downstream TVBGs 24 and 24' recorded in PTR plate 35 provide diffraction at Bragg angles opposite to those of respective upstream gratings 22 and 22'. As a result, collimated beams at λ3 and λ2, respectively are overlapped in near and far fields. A third broadband beam 52 at λ1 propagates through multiplexed hologram 35 without distortion and overlaps twice-diffracted beams 54, 56 in the near and far fields. Similar to the above-disclosed configurations, the number of TVBGs is not limited to the shown three gratings.

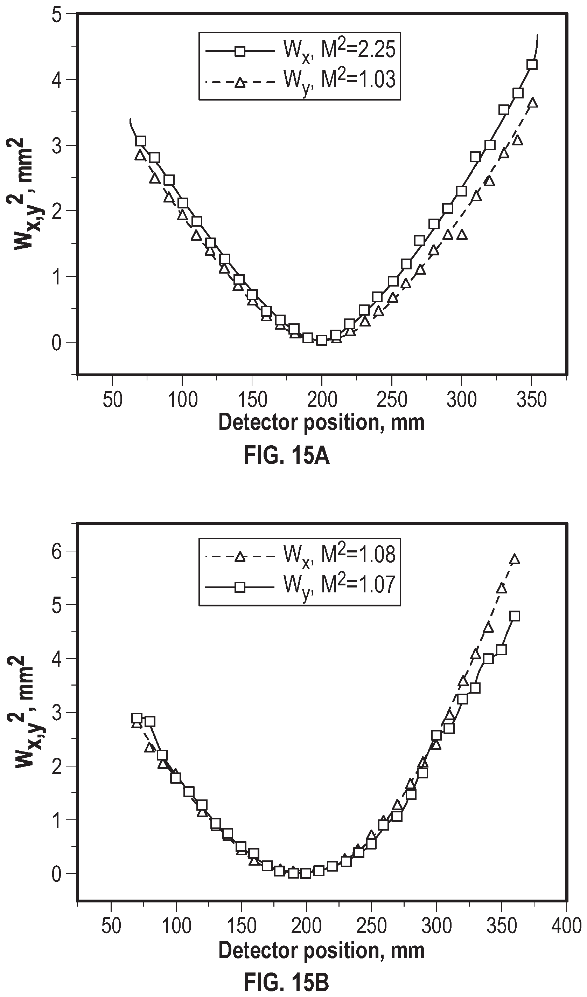

FIGs. 15A and 15B illustrate experimental data confirming the ability of the pair of spatially uniform TVBGs (FIGs 7 and 11) to compensate the angular dispersion of the TVBGs. The data was obtained using a SM superluminescent diode outputting a collimated beam with a quality parameter M2=1 (the highest quality) which propagated through sequentially positioned (+) upstream and (-) downstream TVBGs of the inventive structures, as it shown in FIGs 7 and 11. The TVBGs each has a period $\Lambda$ of 2.47 $\mu$m and thickness of 1.5 mm.

Referring specifically to FIG. 15A, upon diffracting the incident beam in XZ plane by the upstream "+" TVBG, beam quality worsened to My2=1.03 and Mx2=2.25. As can be seen, the divergence of the diffracted beam insignificantly increased in the Y-direction due to the grating's defects. However, in the plane of diffraction (X-direction), the diffracted beam exhibited markedly greater divergence detrimentally affecting the beam's quality. The reason for such a deterioration in the X direction is a result of angular dispersion of the TVBG.

FIG. 15B illustrates the effect the downstream "-" TVBG had on the once diffracted beam. In particular, upon diffraction at the "-" Bragg angle, the twice diffracted beam, such as a single mode (SM) ytterbium (Yb) beam, had My2=1.07 and Mx2=1.08 which, as one of ordinary skill readily realizes, indicate that this beam is of high quality.

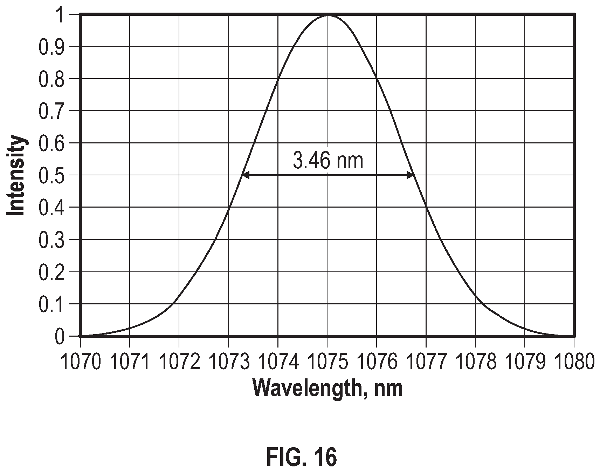

The second problem associated with TVBGs and TVCBGs stems from the leakage of radiation between channels, i.e., partial diffraction of a transmitted beam. As discussed above, the spectral width of VBG must be wide enough to diffract a broadband beam, such as one shown in FIG. 16. In particular, the latter illustrates the emission spectrum of the output of a rather typical high power SM Yb fiber laser. The leakage occurs when side lobes 18 of FIG. 1A, flanking main lobe 16 of maximum diffraction efficiency, spectrally spread and diffract adjacent beams that should be transmitted.

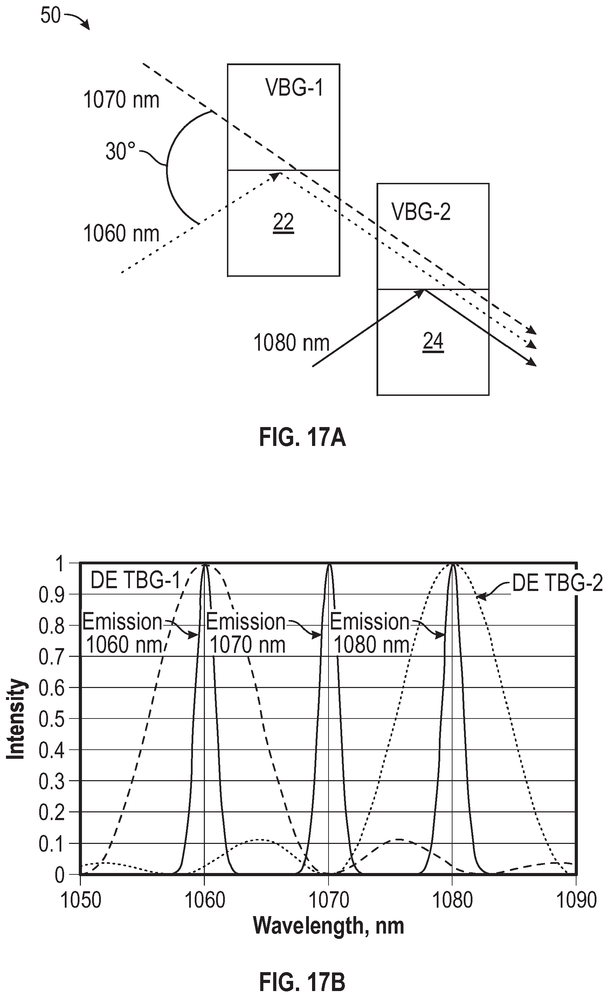

FIGs. 17A to 17B provide the illustration of the leakage mechanism in the inventive combiner 50 of the above-discussed TVCBGs and TVBGs of respective FIGs. 4 to 6, 7, 11 to 14 combining two and more channels. As an example, a three channel-structure including periodic TVBGs combining respective 1060 nm, 1070 nm and 1080 nm wavelengths is discussed below, but as one of ordinary skill readily realizes, the following description is fully applicable to TVCBGs.

Referring to FIG. 17A, TVBG 22 diffracts the 1060 nm channel and transmit the 1070 nm channel which merge into a first collimated combined beam at 1060 nm and 1070 nm. The latter is incident on downstream TVBG 24 which transmits the first combined beam and diffracts the 1080 nm channel such that all three beam are combined in a total combined collimated beam. As shown above, combiner 50 minimizes the angular dispersion due to the inventive structure. But the angular dispersion is not the only phenomenon observed in the shown structure, as explained below.

FIG. 17B illustrates diffraction efficiency spectra of gratings 22 and 24 of FIG. 17A. Specifically, the gratings are recorded with a 2.05 $\mu$m period and thickness of 2.37 mm in PTR glass. The red curves are emission spectra of respective SM Yb lasers with spectral width of 3.4 nm (FW10dB). The gratings have respective wide spectra to provide the efficient diffraction of respective beams at 1060 nm and 1080 nm. In other words, the 1060 and 1080 channels each are placed at the maximum diffraction efficiency of the spectrum of a corresponding grating. To avoid unnecessary crosstalk between channels at 1060 nm and 1070 nm and channels 1080 nm and 1070 nm, the 1070 nm channel is placed to the first zero in the diffraction spectrum of each grating 22 or 24. However, as mentioned above, due to the nature of VBGs, the spectrum of each grating also has a group of side lobes that spread into areas of other channels. Thus, both upstream and downstream gratings 22, 24 respectively transmit the 1070 nm channel with some losses caused by low-efficiency diffraction at the wings of the central lobe and side lobes. Additionally, downstream combining TVBG 24 diffracts portions of respective 1060 and 1070 nm channels, which it should not, as the first combined beam propagates through this TVBG. The same result - undesirable diffraction of transmitted channels - would be obtained if the relative position of gratings 22 and 24 were reversed. In this case, TVBG 22 would be a downstream combining grating affecting the 1080 nm and 1070 nm channels combined into the first output beam in upstream grating 24. Based on the foregoing, it is necessary to suppress side lobes of the spectrum of each grating 22, 24.

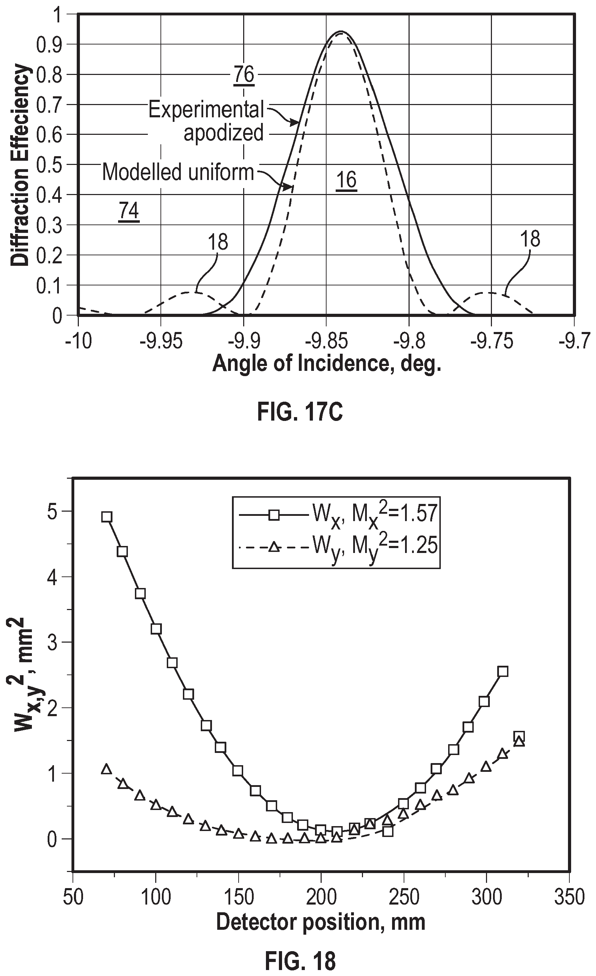

FIG. 17C shows the suppression of side lobes 18 of FIG. 1A in a single TVBG, such as downstream TVBG 24 of FIGs. 7 to 14, by using an apodization technique known to one of ordinary skill. In general, the term apodization means gradual change of RIM in the direction of beam propagation that results in eliminating the unfavorable features of the spectrum, such as side lobes 18. Here, the apodization includes forming a specific profile of RIM in direction perpendicular to grating vector KG of FIGs. 4, 5, 8, 10 and 11. In particular, the apodization technique used here includes gradually erasing RIM by exposing the surface layers to a short wavelength UV radiation. The results shown in FIG. 17C were obtained using a 4 mm thick TVBG with a period A of 3 $\mu$m and gradual erasing of RIM in 0.5 mm thick surface layers. Compared to uniform TVBG 74, apodized TVBG 76 provides a significant suppression of side lobes 18. A thorough optimization of the apodization profile can practically completely suppress side lobes 18 which allows for the decreased spectral distance between adjacent channels. Compared to the inventive TVBG and TVCBG each of which combines no more than 4 broadband beams/channels, the inventive apodized VBG can combine 5 to 6 channels significantly increasing the total multi-kW output power.

The third problem related to both TVCBGs and TVBGs and dealt with by this invention is the thermal lensing effect induced by heat which is a result of absorption of high-power broadband beams in the inventive combiner. One of deleterious effects of the thermal lens is its detrimental influence on the parallelism and the beam quality of a beam passing through a TVBG or TVCBG. The absorption of laser emission in a 1 $\mu$m wavelength range is about $10^{-4}$ cm$^{-1}$ ($\approx$250 ppm/cm). It has a thermo-optic coefficient dn/dT<1 ppm/K and coefficient of thermal expansion CTE = 9.5 ppm/K. Therefore, the thermal lens in PTR glass holographic elements is so small that it is of no concern for power densities below 1 kW/cm$^2$.

In contrast to low power densities, higher power densities significantly affect the beam quality. For example, 1 kW SM fiber outputs a 6 mm beam with a beam quality parameter M2 = 1.1 which is incident on a TVBG at the Bragg angle. The grating, configured with a period A 1.17 $\mu$m, thickness 1 mm, and aperture 25$\times$25 mm$^2$, diffracts the beam with the average power density of about 3.5 kW/cm$^2$.

FIG. 18 illustrates the beam quality of the diffracted beam obtained during experiments with the above-disclosed 1 kW fiber laser. As can be seen, the M2 of the diffracted beam in the vertical direction "y", represented by squares, deteriorates to M2=1.25 due to the thermal lensing effect. However, the beam quality lowers sharply in the horizontal direction "x" to an M2 = 1.57 due to a cumulative effect of angular dispersion and thermal lensing. The inventive combiner includes a few structural additions to the above-disclosed main structure which solve this problem.

One of the structural additions includes using a phase mask. Yet in contrast to monochromatic phase masks that cannot operate with broadband beams, the inventive combiner utilizes a holographic achromatic phase mask (HAPM) that corrects the thermal distortions accumulated in a beam combiner. The thermal lens induced in the combining TVBG (or single TVCBG) of the inventive combiner by high power beams with Gaussian profile of power density is usually a concave lens with a complex shape. Accordingly, to minimize the induced divergence, this beam passes through a negative lens with a complex shape which substantially compensates the spectral aberrations caused by the positive thermal lens. Thus, the HAPM provides the optical effect which is opposite to the effect by the induced thermal lens and therefore compensates for the thermal lens induced in the combining TVBGs. Accordingly, the inventive combiner provided with the HAPM outputs the combined beam with a substantially higher quality and therefore greater brightness than the beam combined in the inventive combiner without it. The HAPM used in this invention is disclosed in detail in a co-pending patent application PCT/US21/16588 which together with the subject matter application is commonly owned and incorporated herein in its entirety by reference.

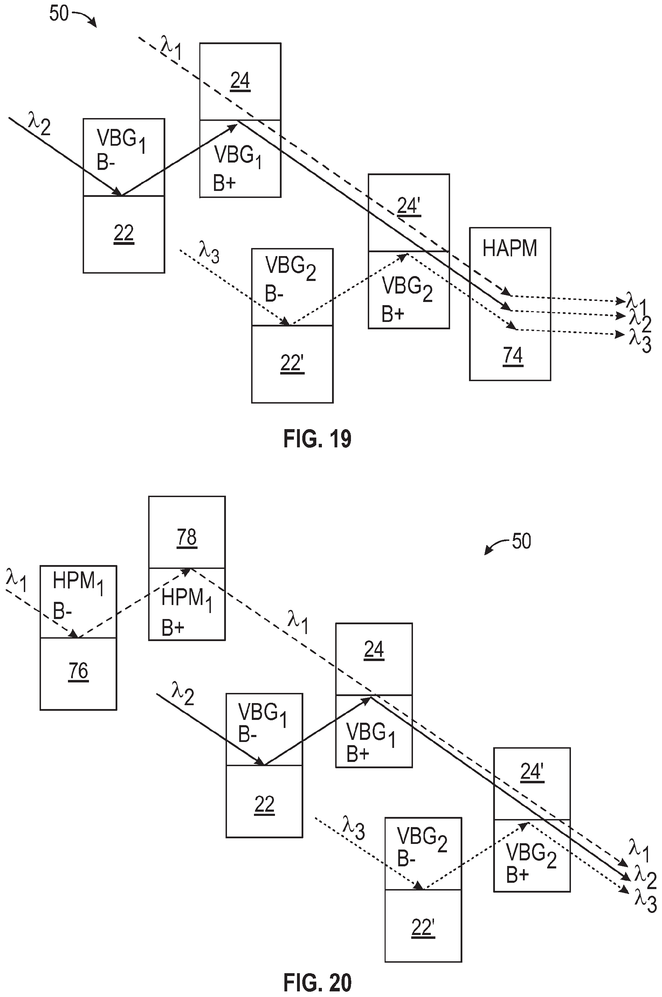

FIG. 19 illustrates an example of inventive combiner 50 of FIG. 4 to 14 incorporating the above-discussed HAPM such as a hologram of a complex conventional or Fresnel lens. A first pair of upstream and downstream TVBG1 22, 24 are aligned at respective "-" and "+" Bragg angles. The downstream TVBG1 24 transmits a broadband high-power beam of spectral components centered at $\lambda$1 wavelength. The upstream TVBG1 22 and downstream TVBG1 24 diffract another high-power beam with spectral components $\lambda$2 wavelength so that the combined collimated beam at $\lambda$2 wavelength and transmitted beam at $\lambda$1 constitute a first combined beam. A second pair of identical upstream 22' and downstream 24' TVBGS2 diffract a group of spectral components $\lambda$3 twice. The combining downstream TVBG2 24' transmits the first combined beam and output a total combined beam at $\lambda$1, $\lambda$2 and $\lambda$3. The power density radial gradient in the combined beam induces a thermal lens which increases the beam divergence. To improve the brightness of the total combined beam, the latter is guided through a HAPM 74 configured to compensate the effect of the thermal lens in TVBG 24'. The other HAPM 74 can be located between TVBGs 24 and 24' respectively to increase brightness of the first combined beam. Alternatively, HAPM 74 may be written within the same PTR glass as TVBG 24'. Note that all or some of the above discussed TVBGs may be chirped. It is noted that the designation of beams as "first" and "second" in the foregoing embodiment descriptions refers to the order in which the beams are introduced in the respective figures. In the appended claims, the "first broadband beam" denotes the beam that is diffracted by the TVCBG and the "second broadband beam" denotes the beam that is transmitted, irrespective of the order of introduction in the figure descriptions.

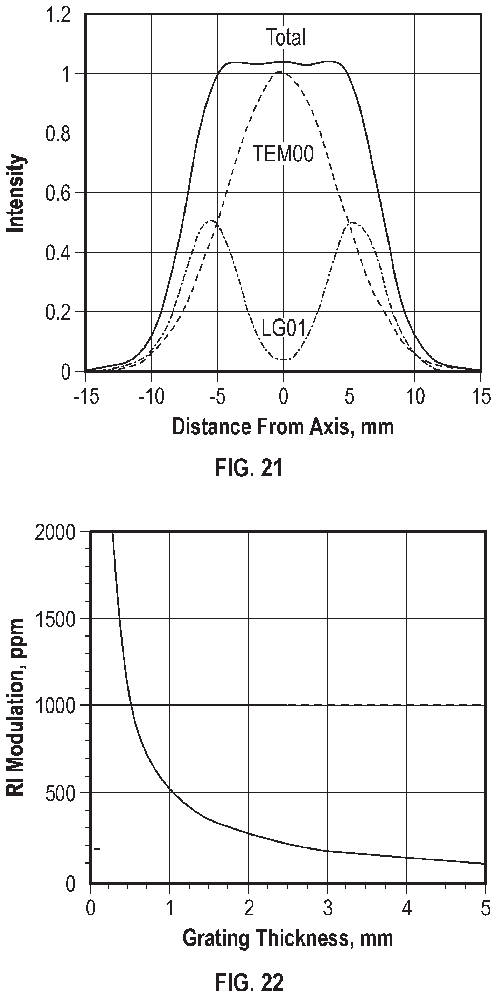

FIGs. 20 and 21 illustrate inventive beam combiner 50 provided with another structural solution for compensating thermal lensing. The added structure minimizes the impact of the thermal lens on the combined beam's brightness by incorporating a holographic phase mask (HPM). The latter alters the transmitted beam's intensity profile and converts it to a donut-shaped profile. As a result, the merger of the donut-shaped and Gaussian beams results in a flattop combined beam.

Referring specifically to FIG. 20, combiner 50, realizing the above-discussed concept, combines, for example, three broadband beams having respective groups of spectral components $\lambda 1$, $\lambda 2$ and $\lambda 3$. The upstream pair of "-" and "+" HPMs 76, 78 respectively, sequentially diffract the $\lambda 1$ spectral components of the first broadband Gaussian beam such that the Gaussian beam (TEM00) with $\lambda 1$ spectral components is converted to a collimated optical vortex beam, e.g. Laguerre-Gaussian beam (LG01) generally having a donut shape better seen in FIG. 21. The latter has rotational symmetry along its propagation axis and thus carries an intrinsic rotational orbital angular momentum affecting anything along the beam's path. The downstream TVBGs 24 and 24' of respective pairs of TVBGs 22, 24 and 22', 24', which eliminate angular dispersion of the gratings in accordance with the main inventive concept, transmit the LG01 beam. The latter sequentially merges with each of diffracted beams of $\lambda 2$ and $\lambda 3$ spectral components in respective downstream TVBGs 24, 24' and minimizes the effect of the thermal lens within each of these gratings. The beam-converting system of HPMs 76, 78 may include additional HPMs if necessary, which may be the case with the increased number of TVBG pairs. It is understood that the HAPM-based thermal lens compensation disclosed in connection with FIG. 19 and the HPM-based beam profile conversion disclosed in connection with FIG. 20 may be employed individually or in combination within the same beam combiner, depending on the power level and beam quality requirements of a particular application.

FIG. 21 illustrates the result obtained using the above-disclosed structure of FIG. 20. As can be seen, the merger of the donut-shaped LG01 and diffracted Gaussian beam TEM00 results in the total beam with a flattop intensity profile.

FIG. 22 illustrates still another structural consideration which includes configuring a TVBG or TVCBG with the smallest possible thickness. This approach provides the smallest absorption of radiation, smallest heat generation, fastest thermal conductivity to surfaces, and smallest optical path, and therefore, largest focal length of the lens. The determination of the optimal thickness is based on dependence of the grating's efficiency on refractive index modulation (RIM) and thickness.

The aspects disclosed herein in accordance with the present invention, are not limited in their application to the details of construction and the arrangement of components set forth in the following description or illustrated in the accompanying drawings. These aspects are capable of assuming other embodiments and of being practiced or of being carried out in various ways. Examples of specific implementations are provided herein for illustrative purposes only and are not intended to be limiting. In particular, acts, components, elements, and features discussed in connection with any one or more embodiments are not intended to be excluded from a similar role in any other embodiments.

Also, the phraseology and terminology used herein is for the purpose of description and should not be regarded as limiting. References in the singular or plural form are not intended to limit the presently disclosed systems or methods, their components, acts, or elements. In addition, in the event of inconsistent usages of terms between this document and documents incorporated herein by reference, the term usage in the incorporated reference is supplementary to that of this document; for irreconcilable inconsistencies, the term usage in this document controls.

Having thus described several aspects of at least one example, one of ordinary skill in the art readily appreciates that various alterations, modifications, and improvements will readily occur to those skilled in the art. For instance, examples disclosed herein are applicable in other contexts. Such alterations, modifications, and improvements are part of this disclosure. Accordingly, the foregoing description and drawings are by way of example only.

A spectral beam combiner according a first aspect comprises at least one transmitting volume chirped Bragg grating (TVCBG) which diffracts a first broadband beam propagating at one central wavelength, which satisfies the Bragg condition, and incident on the TVCBG at one of (+) (-) Bragg angles, and transmits at least one second broadband beam propagating at a second central wavelength, which does not satisfy the Bragg condition, and incident on the TVCBG at the Bragg angle which is opposite to the one Bragg angle of the first broadband beam, wherein the one TVCBG is configured to: eliminate divergence of the first broadband beam, which is resulted from dispersion of the one TVCBG, in a plane of diffraction, and combine the first diffracted and second transmitted broadband beams into a first single high-power collimated broadband output beam.

According to a second aspect, the spectral beam combiner of the first aspect further comprises at least one or more additional TVCBGs located upstream or downstream from the one TVCBG and diffracting a third broadband beam propagating at the Bragg angle and incident on the additional TVCBG at a central wavelength which satisfies the Bragg condition, wherein the additional TVCBG merges the first collimated output additional beams into a second high-power collimated broadband output beam.

According to a third aspect, the spectral beam combiner of the first aspect further comprises a first thermal lens compensator, wherein a thermal lens is induced in the one TVCBG by one of or both first and second broadband beams.

According to a fourth aspect, the first thermal lens compensator includes a holographic achromatic broadband phase mask (HAPM) recorded in a designated PTR glass plate which is located downstream from the one TVCBG or recorded in a PTR glass plate with the one TVBG.

According to a fifth aspect, the first thermal lens compensator includes a pair of holographic phase masks (HPM) which are aligned at respective opposite Bragg angles upstream from the one TVCBG, the HPMs diffracting the second broadband beam while converting a Gaussian intensity profile thereof to a donut-shaped intensity profile.

According to a sixth aspect, the spectral beam combiner of the first aspect further comprises at least one pair of identical first and second transmitting volume Bragg gratings (TVBGs) in optical communication with the TVCBG and spaced therefrom along a light path, the TVBGs being spaced apart and aligned at respective opposite "+" and "-" Bragg angles.

According to a seventh aspect, the first and second TVBG sequentially diffract a fourth broadband beam at a fourth central wavelength satisfying the Bragg condition to provide a twice-diffracted fourth collimated broadband beam, the second TVBG transmitting the first broadband output beam which merges with the twice-diffracted fourth collimated beam into a single third broadband collimated output beam.

According to an eighth aspect, the spectral beam combiner of the seventh aspect further comprises at least one additional pair of first and second identical TVBGs aligned at respective opposite Bragg angles to provide sequential diffraction of a fifth broadband beam at a fifth central wavelength which satisfies the Bragg condition and is different from the first, second and fourth central wavelengths.

According to a ninth aspect, the first and second TVBGs of respective pairs each are recorded in a designated PTR glass plate.

According to a tenth aspect, the first TVBGs of respective pairs each are recorded in a designated PTR glass plate, whereas the second TVBGs of respective pairs both are recorded in a single multiplexing PTR glass plate.

According to an eleventh aspect, the spectral beam combiner of the sixth aspect further comprises a second thermal lens compensator including a holographic achromatic broadband phase mask (HAPM) recorded in a designated PTR glass plate which is located downstream from the second TVBG or recorded in the PTR glass with the second TVBG.

According to a twelfth aspect, the spectral beam combiner of the sixth aspect further comprises a second thermal lens compensator which includes a pair of holographic phase masks (HPM) and is located upstream from the first TVBG, the HPMs being aligned at respective opposite Bragg angles so as to twice diffract the first broadband collimated output beam and second broadband beam while converting a Gaussian intensity profile thereof to a donut-shaped intensity profile.

According to a thirteenth aspect, the first broadband collimated output beam with the donut-shaped intensity profile merges with the fourth twice-diffracted broadband beam in the second TVBG such that the third collimated broadband output beam has a flattop intensity profile.

According to a fourteenth aspect, the first and second TVBGs each have a thickness of at most about 1 mm and refractive index modulation (RIM) of about 1000 ppm to provide a 100 % diffraction efficiency at a wavelength of the twice-diffracted first broadband beam in a 1 $\mu$n range.

According to a fifteenth aspect, the first and second TVBGs are apodized to minimize leakage between diffracted and transmitted beams, the apodized TVBGs being configured with a bell-shaped profile of RIM recorded in a direction perpendicular to a grating vector of the TVBG.

According to a sixteenth aspect, the first and second broadband beams each have a spectral width ranging between 3 nm and 10 nm.

According to a seventeenth aspect, the first and second broadband beams each are a single transverse mode beam or multimode beam.

According to an eighteenth aspect, the first and second TVBGs each are configured with a grating vector (A%) which has an arbitrary orientation relative to the surface.

According to a nineteenth aspect, the first and second central wavelengths each are selected from a 205 nm to 3500 nm wavelength range.

## Claims

1. A spectral beam combiner (50) comprising

   at least one transmitting volume chirped Bragg grating, TVCBG, (24, 62) configured to:

      diffract a first broadband beam (42, 66) propagating at one central wavelength, which satisfies the Bragg condition, and incident on the TVCBG (24, 62) at one of (+) (-) Bragg angles,
      transmit at least one second broadband beam (40, 68) propagating at a second central wavelength, which does not satisfy the Bragg condition, and incident on the TVCBG (24, 62) at the Bragg angle which is opposite to the one Bragg angle of the first broadband beam (42, 66), and

combine the diffracted first (42, 66) and transmitted second (40, 68) broadband beams into a first single high-power collimated broadband output beam, **characterized in that** the spectral beam combiner (50) further comprises:

a first thermal lens compensator, wherein a thermal lens is induced in the one TVCBG (24, 62) by one of or both first and second broadband beams (40, 42, 66, 68),

wherein the first thermal lens compensator includes:

a holographic achromatic broadband phase mask, HAPM, recorded in a designated PTR, photo-thermo-refractive, glass plate (35) which is located downstream from the one TVCBG (24, 62) or recorded in a PTR glass plate (35) with the one TVCBG (24, 62); and/or

a pair of holographic phase masks, HPM, which are aligned at respective opposite Bragg angles upstream from the one TVCBG (24, 62), the HPMs diffracting the second broadband beam (40, 68) while converting a Gaussian intensity profile thereof to a donut-shaped intensity profile.

2. The spectral beam combiner (50) of claim 1,

further comprising at least one or more additional TVCBGs (22, 64) located upstream or downstream from the one TVCBG (24, 62) and diffracting a third broadband beam (36, 70) propagating at the Bragg angle and incident on the additional TVCBG (22, 64) at a central wavelength which satisfies the Bragg condition, wherein the additional TVCBG (22, 64) merges the diffracted third broadband beam (36, 70) and the first collimated output beam into a second high-power collimated broadband output beam.

3. The spectral beam combiner (50) of claim 1, comprising

at least one pair of identical first and second transmitting volume Bragg gratings, TVBGs, in optical communication with the TVCBG (24, 62) and spaced therefrom along a light path, the TVBGs being spaced apart and aligned at respective opposite "+" and "-" Bragg angles such that the first and second TVBGs sequentially diffract a broadband beam at a central wavelength satisfying the Bragg condition at respective opposite Bragg angles so as to cancel out the angular dispersion of the diffracted beam,, **characterized in that** the spectral beam combiner (50) further comprises:

a second thermal lens compensator including:

a holographic achromatic broadband phase mask, HAPM, recorded in a designated PTR glass plate (35) which is located downstream from the second TVBG or recorded in the PTR glass plate (35) with the second TVBG; or

a pair of holographic phase masks, HPM, and is located upstream from the first TVBG, the HPMs being aligned at respective opposite Bragg angles so as to twice diffract the first broadband collimated output beam and second broadband beam while converting a Gaussian intensity profile thereof to a donut-shaped intensity profile.

4. The spectral beam combiner (50) of claim 3, wherein

the sequentially diffracted broadband beam is a fourth broadband beam at a fourth central wavelength, and

the second TVBG transmits the first broadband output beam which merges with the twice-diffracted fourth collimated broadband beam into a single third broadband collimated output beam.

5. The spectral beam combiner (50) of claim 4, further comprising at least one additional pair of first and second identical TVBGs aligned at respective opposite Bragg angles to provide sequential diffraction of a fifth broadband beam at a fifth central wavelength which satisfies the Bragg condition and is different from the first, second and fourth central wavelengths.

6. The spectral beam combiner (50) of claim 5,

wherein the first and second TVBGs of respective pairs each are recorded in a designated PTR glass plate (35); and/or

wherein the first TVBGs of respective pairs each are recorded in a designated PTR glass plate (35), whereas the second TVBGs of respective pairs both are recorded in a single multiplexing PTR glass plate (35).

7. The spectral beam combiner (50) of claim 4, wherein the first broadband collimated output beam with the donut-shaped intensity profile merges with the fourth twice-diffracted broadband beam in the second TVBG such that the third collimated broadband output beam has a flattop intensity profile.

8. The spectral beam combiner (50) of claim 3, wherein the first and second TVBGs each have a thickness of at most about 1 mm and refractive index modulation, RIM, of about 1000 ppm to provide a 100 % diffraction efficiency at a wavelength of the twice-diffracted broadband beam in a 1 $\mu$m range.

9. The spectral beam combiner (50) of claim 3, wherein the first and second TVBGs are apodized to minimize leakage between diffracted and transmitted beams, the apodized TVBGs being configured with a bell-shaped profile of RIM recorded in a direction perpendicular to a grating vector of the TVBG.

10. The spectral beam combiner (50) of any one of claims 1 to 3,

wherein the first and second broadband beams (40, 42, 66, 68) each have a spectral width ranging between 3 nm and 10 nm, and/or wherein the first and second broadband beams (40, 42, 66, 68) each are a single transverse mode beam or multimode beam.

11. The spectral beam combiner (50) of claim 3, wherein the first and second TVBGs each are configured with a grating vector ($K_G$) which has an arbitrary orientation relative to the surface.

12. The spectral beam combiner (50) of any one of claims 1 to 3, wherein the first and second central wavelengths each are selected from a 205 nm to 3500 nm wavelength range.

FIG. 1A
(Known Art)

FIG. 1B
(Known Art)

EP 4 764 636 A2

**FIG. 2**
**(Known Art)**

**FIG. 3**
**(Known Art)**

16

**FIG. 4**

**FIG. 5**

**FIG. 6**

**FIG. 7**

FIG. 8

FIG. 9

**FIG. 10**

FIG. 11

**FIG. 12**

**FIG. 13**

**FIG. 14**

FIG. 15A

FIG. 15B

EP 4 764 636 A2

FIG. 16

27

**FIG. 17A**

**FIG. 17B**

**FIG. 17C**

**FIG. 18**

50

λ₁

λ₂

24

VBG₁
B-

VBG₁
B+

22

λ₃

VBG₂
B-

24'

VBG₂
B+

22'

HAPM

74

λ₁
λ₂
λ₃

**FIG. 19**

50

λ₁

HPM₁
B-

78

HPM₁
B+

76

λ₁

24

λ₂

VBG₁
B-

VBG₁
B+

22

λ₃

VBG₂
B-

24'

VBG₂
B+

22'

λ₁
λ₂
λ₃

**FIG. 20**

**FIG. 21**

**FIG. 22**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2116588 W

**Non-patent literature cited in the description**

- Optimization research of transmitting volume Bragg gratings for spectrum beam combining. **L. HAO et al.** 2012, 17th Opto-Electronics and Communications Conference (OCC). IEEE, 02 July 2012, 663-664

- **A. OLEKSIY**. Dense Spectral Beam Combining with Volume Bragg Gratings In Photo-thermo-refractive Glass. *Dissertation*, 01 January 2009